# EUROPEAN PATENT SPECIFICATION

(11) **EP 0 992 811 B1**
(45) Date of publication and mention of the grant of the patent: **14.12.2011**
(21) Application number: 99119090.1
(22) Date of filing: 01.10.1999
(51) Int. Cl.: G01R 31/36, H02J 7/02, H02J 7/00, H02M 3/158

(54) **Battery apparatus and control system therefor**
Vorrichtung und Steuerungsverfahren für Batterie
Appareil et méthode de commande pour batterie

(30) Priority: 06.10.1998 JP 28379198; 17.12.1998 JP 35866698
(43) Date of publication of application: 12.04.2000
(73) Proprietor: Hitachi, Ltd., Tokyo 100-8280 (JP)
(72) Inventor: Kinoshita, Takuya, Hitachi-shi, Ibaraki 319-1225 (JP); Miyazaki, Hideki, Hitachi-shi, Ibaraki 319-1413 (JP); Emori, Akihiko, Hitachi-shi, Ibaraki 316-0025 (JP); Nomura, Takahiro, Niigata-shi, Niigata 950-2044 (JP)
(74) Representative: MERH-IP Matias Erny Reichl Hoffmann

(56) References cited:
- EP-A- 0 564 726
- DE-A- 3 628 138
- DE-A- 4 103 697
- DE-C- 19 628 366
- GB-A- 2 112 594
- GB-A- 2 265 266
- US-A- 5 438 250
- US-A- 5 646 534

## Description

### BACKGROUND OF THE INVENTION

The present invention relates to a battery apparatus comprising an electricity storing means having a battery such as a secondary battery and a control system therefor.

In recent years, various kinds of electric energy storing means such as a secondary battery and a capacitor (hereinafter, referred to simply as battery) have been widely used as a clean energy source for a vehicle and so on.

The battery is sometimes difficult to increase its voltage or power capacity per one unit, and a plurality of batteries are often used by connecting them in series or in parallel.

In a case of connecting a plurality of batteries in series, when the batteries vary in electric power capacity, initial voltage or temperature, it is difficult to uniformly share voltage to each of the batteries.

Particularly, in a case where lithium secondary batteries or electric double layer capacitors using an organic solvent as the electrolyte are connected in series, variation in terminal voltage of the batteries causes over-discharge to result degradation of performance and shortening of life-time of the batteries.

In a case of lithium secondary batteries, there is provided a protective function to stop charging or discharging by detecting over-charge or over-discharge of the secondary batteries. In a case where a plurality of lithium secondary batteries having such a protective function are connected in series, the safety can be secured by stopping charging at the time when a voltage of some of the secondary batteries which have a high initial voltage reaches an over-charge protective level. However, the remaining secondary batteries which have a low initial voltage are stopped to be charged in the middle of charging before being charged sufficiently.

Similarly, discharging is stopped at the time when the voltage of the secondary batteries which have the low initial voltage reaches an over-discharge level, and the secondary batteries which have the high initial voltage are stopped to be discharged while still storing a sufficient quantity of electricity.

As described above, when a plurality of batteries having such a protective function to over-charge and over-discharge are connected in series, the available electric capacity is only a part of the electric power capacity which may be obtainable with all of the plurality of batteries, and accordingly the availability of electric power is reduced. In order to avoid such a problem, it is necessary to take measures that an initial voltage of each of the batteries connected in series is accurately detected, and the voltages of all the batteries are made uniform when the initial voltages of some of the batteries are different from the initial voltage of the other batteries.

Further, there is a recent trend that lithium secondary batteriess, nickel-metal hydride secondary batteriess, electric double layer capacitors are used for batteries for an electric vehicle. However, in any type of the batteries, it is required to accurately measure a quantity of the electricity stored in the batteries. In measuring a quantity of stored electricity (hereinafter, referred to as remaining quantity measurement), a voltage of a battery is measured and a remaining quantity is estimated from the voltage and an SOC (state of charge; percentage of remaining quantity on the basis of full charge of 100 %). In the estimation, highly accurate calculation is performed by taking into consideration change in internal resistance due to temperature or life-time of the battery. In such remaining quantity measurement, the voltage of the battery must be measured within a high accuracy of several tens mV.

An example of detecting a voltage of batteries connecting in series is disclosed in Japanese Patent Application Laid-Open No.10-191573. In the battery charging system using this conventional technology, the secondary battery group is composed of a plurality (three, in this example) of secondary batteries connected in series. A discharging circuit is connected to each of the secondary batteries in parallel. A switching circuit is provided. The switching circuit selects one set out of three sets of input terminals, each set being composed of two input terminals, to connect to the output terminals, and each of the three sets of input terminals is connected to each of the secondary batteries in parallel. Input terminals of a differential amplifier are connected to the output terminals of the switching circuit, and output terminals of the differential amplifier are connected to analogue input terminals of a micro-controller 1007.

In this conventional example, the micro-controller outputs a signal to select a set of +terminal and -terminal of the secondary battery using the switching circuit. A voltage of the secondary battery transmitted to the differential amplifier through the switching circuit is transmitted to the micro-controller from the differential amplifier. The micro-controller successively outputs a signal to the switching circuit to select a next secondary battery. Voltages of the secondary batteries are successively selected by the switching circuit in the similar manner and are read and stored in the micro-controller. The micro-controller turns on a switch of the discharging circuit corresponding to a secondary battery having a maximum terminal voltage to discharge, and controls so that the voltage of the secondary battery becomes voltage of the other secondary batteries.

In the above-mentioned conventional technology, there are variations in resistances of a plurality of resistors provided in the differential amplifier. Even if the variations in the resistances are approximately ±1%, an error in voltage becomes several hundreds mV because an error in voltage detecting is larger as a level of the secondary battery is higher. Taking lithium secondary batteries as an example, the usable voltage range is between 2.7 V to 4.2 V, and the relationship between the voltage and the SOC is not linear. When there is a voltage error of several hundreds mV within an SOC range of 70 to 100 %, the remaining quantity is measured with an error of several tens %. Therefore, the voltage error is preferably smaller than several tens mV. The same can be said for nickel-metal hydride batteries. A differential amplifier ensuring variations of resistances less than ±1% is on the market, but is very expensive.

Further, the secondary battery has an internal impedance, and in the case of a lithium secondary battery, the internal impedance is capacitive in a low frequency range up to several kHz and inductive in frequency range above that. Therefore, when charge current or discharge current flowing in the secondary battery varies with time (called as current ripple) or contains disturbance such as surge current, voltage of the battery contains a transient oscillation component due to the effect of the high frequency component of the current. In the voltage detection of the battery, it is required to detect a value without such a transient oscillation component. In order to accurately detect a battery voltage in direct current in the practical use, a filter for removing the oscillation component is necessary. When a filter is provided, it is necessary to pay an attention to selection of the filter having an appropriate degree of attenuation characteristic. Objects of the voltage detection in the battery are measurement of the remaining quantity, protection against over-charging and over-discharging, and compensation of voltage unbalance in which the voltage change to charging and discharging current is slow and accordingly the voltage may be measured on a second-by-second basis (the above-mentioned transient oscillation component is nor measured). It is considered from the above that a filter having an attenuation characteristic of second order, but such a filter has a large volume.

Further, since the voltage detecting means always detects voltage of the secondary batteries, it is preferable that an electric power consumption rate of the detecting circuit is as small as possible. Although electric power consumption rates of differential amplifiers widely spread depending on products, there is limitation in reducing the electric power consumption rate because the differential amplifier is an analogue circuit and requires bias current.

The battery is the direct current power supply, but the general loads require alternating current power. Further, voltage between terminals of the common battery changes depending on an amount of charging and discharging power. Therefore, a battery apparatus, an electric machine or a motor using a battery needs an electric power converters such as a DC/AC converter for controlling charging and discharging, an AC/DC converter, a DC/AC inverter for converting AC/DC voltage. A conventional uninterruptible power supply apparatus is shown in Japanese Patent laid-open application No. 7-298516, for example.

These electric power converters generally use chopping operation of semiconductor switches and induced voltage produced in an inductor in the converting process. Therefore, the input and output current and voltage of these electric power converters include a large amount of high frequency ripple components changing in conjunction with the chopping operation.

When voltage and current contain ripple components as described above, it is difficult to detect correct values of the voltage and the current. Particularly, it is a large problem for a battery such as a lithium secondary battery which needs to be controlled by accurately detecting voltage and current.

Therefore, it is necessary to remove or reduce the ripple components when the copper type electric power converter and the battery are connected.

On the other hand, the copper type electric power converter uses chopping operation of semiconductor switches and induced voltage produced in an inductor in the converting process, as described above. Therefore, the ripple components can be reduced to a certain degree by increasing the switching frequency or increasing the inductance.

However, actually, there is a limitation in increasing the switching frequency or increasing the inductance. Particularly, switching frequency of semiconductor switch satisfying this condition becomes lower as the current increases or the voltage increases. Further, a feasible value of inductance becomes small. In addition, the semiconductor switch and the inductor are high in price, heavy in weight and large in size.

EP 0 564 726 A1 relates to a differential converting type charging circuit comprising differential actuating type active switch device being controlled by differential setting circuit in company with drop type current detection device, capacitor and commutating inductance that allows relatively to control differential active switch device based on the potential of reference drop type current detection device being controlled by differential setting circuit and the potential of capacitor, to enable each end of capacitor to appear a steady potential and to charge a store battery through commutating type inductance. This differential converting type charging circuit can be applied to discontinuous pulse DC power supply or continuous DC power supply wherein a solid thyristor being used as active switch device is applicable to discontinuous pulse DC power supply, and power crystal being used as active switch device is applicable to continuous DC power supply or discontinuous pulse DC power supply.

US 5, 646, 534 relates to a battery monitor for monitoring the voltage and temperature of the batteries associated with a battery pack of an electric vehicle. The battery monitor includes an opto-isolator that electrically separates an isolated portion of the battery monitor connected to the batteries from a non-isolated portion of the battery monitor that transmits battery voltage and temperature signals to a vehicle controller of the electric vehicle. US 5,646,534 discloses all features of the preamble of claim 1.

### SUMMARY OF THE INVENTION

The present invention is set forth in claim 1.

In order to solve the above problems, in a battery apparatus and a control system for the battery apparatus in accordance with the present invention, voltages of batteries are detected by detecting voltages of an electric energy storing means charged by the batteries.

A battery apparatus and a control system for the battery apparatus in accordance with the present invention are composed of a first switching means connected to a battery contained in an electricity storing means; a first electric energy storing means connected to the battery through the first switching means; a second switching means connected to the first electric energy storing means; and a voltage detecting means, input terminals of the voltage detecting means being connected to the first electric energy storing means through the second switching means.

A preferable operating feature of the construction is that the first switching means and the second switching means are complementally switched on and off. The voltage detecting means is charged by the battery when the first switching means is switched on and the second switching means is switched off, and the voltage detecting means detects a voltage when the first switching means is switched off and the second switching means is switched on. Since charged voltage of the electric energy storing means is detected, the effect of the resistance components in the circuit on the value of the detected voltage is small. Therefore, the accuracy of the detected voltage can be improved, and accordingly the reliability of the battery apparatus and the control system can be improved.

As the battery and the electric energy storing means, there are various kinds of secondary batteries and capacitors. Semiconductor elements are preferable as the switching means, but the other circuit elements or circuit parts having a function of opening and closing a circuit may be used. The voltage detecting means may have a function of controlling each portion of the batteries using the detected voltage in addition to the function of voltage detection.

A further battery apparatus comprises a battery module composed of one battery or a plurality of batteries; and a chopper type electric power converter, wherein an inductor is inserted in series to the battery module, and a capacitor is added between both ends of the series connection portion of the battery module and the inductor in parallel.

Further, a battery apparatus comprises a battery module group formed by connecting a plurality of battery modules composed of one battery or a plurality of batteries in series; and a chopper type electric power converter, wherein an inductor is inserted in series to each of the battery modules, and a capacitor is added between both ends of each of the series connection portions of the battery module and the inductor in parallel.

Otherwise, a chopper inductor composing the chopper type electric power converter comprises a plurality of conductors connected in series, and a rectifier is connected to part of the inductors in series, and another rectifier being connected between both ends of the series connection portion of the part of inductors and the rectifier in parallel so as to have an inverse polarity to the rectifier.

A current detecting circuit for detecting current flowing in the battery module is added to the battery apparatus, and a chopper inductor composing the chopper type electric power converter comprises a plurality of conductors connected in series, a switching means being connected to part of the inductors in series, a switching means being connected between both ends of the series connection portion of the part of inductors and the switching means in parallel, these switching means being switched corresponding to a detected value of the current detecting circuit.

Further, in a case where the battery apparatus comprises a battery control circuit connected to the battery in parallel, it is possible that the battery is connected to a capacitor in parallel, and the battery control circuit is connected to the battery and the capacitor in parallel through an inductor.

In the battery apparatus having the above-mentioned configuration, the inductor inserted in series to the battery module becomes a high impedance and the capacitor connected to the battery module in parallel becomes a low impedance to the high frequency electric power (the ripple components). Therefore, the high frequency electric power, that is, the ripple components does not pass through the inductor becoming a high impedance but passes through the low impedance capacitor side.

On the other hand, the inductor inserted in series to the battery module becomes a low impedance and the capacitor connected to the battery module in parallel becomes a high impedance to the direct current power. Therefore, the direct current power does not pass through the capacitor becoming a high impedance but passes through the low impedance inductor side.

Thereby, the high frequency electric power affecting bad effects to the battery and the battery control circuit does not pass through the battery and the battery control circuit, and on the other hand, direct current power necessary for the battery and the battery control circuit can pass through the battery and the battery control circuit.

Further, in the case where the chopper inductor composing the chopper type electric power converter comprises a plurality of conductors connected in series; the rectifier being connected to part of the inductors in series; another rectifier having an inverse polarity to the rectifier being connected between both ends of the series connection portion of the part of inductors and the rectifier in parallel, current flowing through the rectifiers is blocked or by-passed by the rectifiers depending on the current flowing direction. That is, the value of the chopper inductor is changed depending on the current flowing direction.

Otherwise, in the case where the current detecting circuit for detecting current flowing in the battery module is added to the battery apparatus; the chopper inductor composing the chopper type electric power converter comprising a plurality of conductors connected in series; the switching means being connected to part of the inductors in series; the switching means being connected between both ends of the series connection portion of the part of inductors and the switching means in parallel, these switching means are switched corresponding to a detected value of the current detecting circuit. That is, the value of the chopper inductor is changed depending on a value of the current flowing in the battery.

By these configurations, the ripple is reduced by increasing the inductance value depending on the current flowing direction (charging or discharging) or a value of the current.

In the case where the battery apparatus comprises a battery control circuit connected to the battery in parallel; the battery being connected to a capacitor in parallel; the battery control circuit being connected to the battery and the capacitor in parallel through an inductor, the inductor becomes a high impedance and the capacitor connected to the battery module in parallel becomes a low impedance to the high frequency electric power (the ripple components). Therefore, the high frequency electric power, that is, the ripple components does not pass through the inductance becoming a high impedance but passes through the low impedance capacitor side.

On the other hand, the inductor becomes a low impedance and the capacitor connected to the battery module in parallel becomes a high impedance to the direct current power. Therefore, the direct current power does not pass through the capacitor becoming a high impedance but passes through the low impedance inductor side.

Thereby, the high frequency electric power affecting bad effects to the battery and the battery control circuit does not pass through the battery and the battery control circuit, and on the other hand, direct current power necessary for the battery and the battery control circuit can pass through the battery and the battery control circuit.

By these configurations, in the battery apparatus comprising the battery module and the chopper type electric power converter, the ripple in the voltage and the current is reduced.

### BRIEF DESCRIPTION OF THE DRAWINGS

FIG. 1 is a circuit diagram showing a first embodiment in accordance with the present invention.
FIG. 2 is a schematic time chart showing input and output voltages and switching timing of the circuit shown in FIG. 1.
FIG. 3 is a schematic time chart showing input and output voltages and switching timing of the circuit shown in FIG. 1.
FIG. 4 is a circuit diagram showing a second embodiment in accordance with the present invention.
FIG. 5 is a circuit diagram showing a third embodiment in accordance with the present invention.
FIG. 6 is a circuit diagram showing a fourth embodiment in accordance with the present invention.
FIG. 7 is a circuit diagram showing a fifth embodiment in accordance with the present invention.
FIG. 8 is a circuit diagram showing a sixth embodiment in accordance with the present invention.
FIG. 9 is a view showing a seventh embodiment in accordance with the present invention.
FIG. 10 is a circuit diagram showing an eighth embodiment in accordance with the present invention.
FIG. 11 is a circuit diagram showing a first example.
FIG. 12 is a circuit diagram showing a second example.
FIG. 13 is a circuit diagram showing a third example.
FIG. 14 is a circuit diagram showing a fourth example.
FIG. 15 is a circuit diagram showing a fifth example.
FIG. 16 is a circuit diagram showing a sixth example.

### DETAILED DESCRIPTION OF THE PREFERRED EMBODIMENT

First to eighth embodiments of the present invention will be described below in detail, referring to the accompanied drawings.

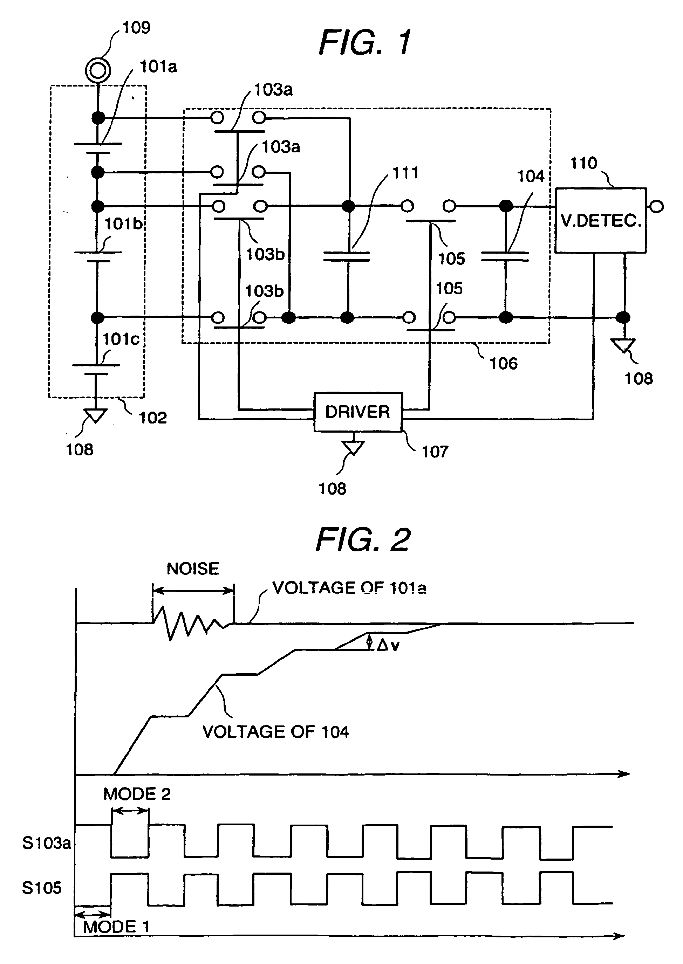

FIG. 1 is a circuit diagram showing a first embodiment in accordance with the present invention. Referring to the figure, the reference characters 101a to 101c indicate unit batteries, the reference character 102 indicates an electricity storing means connecting the three unit batteries in series. The reference character 109 is the highest electric potential terminal of the row of batteries connected in series which is called, hereinafter, referred to as E⁺ terminal. Similarly, the reference character 108 is the lowest electric potential terminal of the row of batteries connected in series which is called, hereinafter, referred to as E⁻ terminal. The unit battery 101a having the positive pole connected to the E⁺ terminal has switching means 103a each provided in the positive pole and the negative pole, respectively, and the unit battery 101a is connected to a capacitor 111 in parallel when the switching means 103a is turned on. The switching means 103a each provided in the positive pole and the negative pole of the unit battery 101a are switched at the same timing. Here, the unit battery means a unit for detecting voltage which includes not only a case of a single battery but also cases where batteries are connected in series, in parallel and in series and parallel.

Similarly, the unit battery 101b connected to the negative pole of the unit battery 101a also has switching means 103b each provided in the positive pole and the negative pole, respectively, and the unit battery 101b is also connected to the capacitor 111 in parallel when the switching means 103b is turned on. Either of the switching means 103a and the switching means 103b is connected to the capacitor 111 corresponding to a control signal from a driver 107. Therefore, hereinafter, the both switching means are generically called selecting switches. The capacitor 111 is in a floating state (it means that the reference electric potential is not fixed and is in a floating electric potential), and consequently the capacitor 111 is charged up to a voltage relative to either of the negative poles of the unit batteries 101a and 101b when either of the both switching means 103a or 103b is turned on.

The unit battery 101c having the negative pole connected to the E⁻ terminal also has switching means for connecting the positive pole and the negative pole to the capacitor 111, but the switching means are omitted in the figure because the configuration of FIG. 1 is simplified.

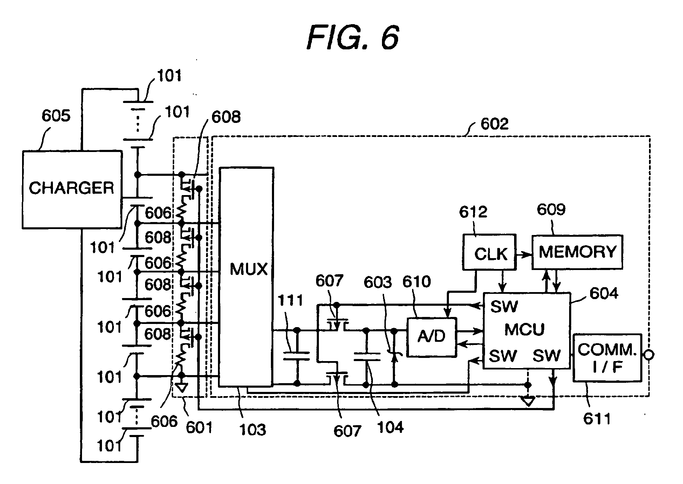

Then, the positive pole and the negative pole terminals of the capacitor 111 are switched off from the unit battery by the switching means 103 out of the switching means 103, 105 driven by a control signal from the driver, and connected to the voltage detecting means 110 by the switching means 105. Therein, the negative pole of the capacitor 111 is connected to a terminal 108 which is a reference electric potential of the voltage detecting means 111. When the capacitor 111 is connected to the voltage detecting means 110 by the switching means 105, the voltage sometimes transiently oscillated. Therefore, in the embodiment of FIG. 1, a capacitor 104 is disposed between the voltage detecting means 110 and the switching means 105 to remove the oscillation components by the capacitor. Therein, the capacitor 104 may be displaced by an electric energy storing means such as a secondary battery. In a case where the oscillation component does not generated, there is no need to arrange the capacitor 104. In a case where there is a possibility that a surge voltage exceeding the withstanding voltage of the voltage detecting means enters into the input of the voltage detecting means, it is preferable that a voltage cramp means is placed in parallel to the capacitor 104. This configuration is to be shown in FIG. 6 later. Further, since the voltage detecting means needs to complete voltage detection before the voltage of the capacitor 104 is decreased, the voltage detecting means is preferably a voltage follower type A/D converter using a JFET input operational amplifier having a small input bias current and a small input offset voltage.

Similar to the voltage detecting means 110, the driver 107 is set the electric potential of the terminal 108 to the reference electric potential. The driver 107 operates one of the selecting switches 103a or 103b and the switching means 105 to alternatively switch on and off corresponding to the control signal received from the voltage detecting means 110. That is, the selecting switch 103 and the switching means 105 are complementarily operated. Further, the voltage detecting means 110 instructs the driver 107 which selecting switch is selected, the selecting switch 103a or 103b. The detailed operation of the embodiment of FIG. 1 will be described below, referring to FIG. 2.

FIG. 2 schematically shows control signals of the switching means in the lower section of the figure, and an input voltage to and an output voltage from the zone indicated by the reference character 106 of FIG. 1. Initially, in mode 1, the selecting switch 103a is turned on and the switching means 105 is turned off by control signals from the driver 107 to connect the unit battery 101a and the capacitor 111 in parallel. Therein, the voltage of the capacitor 111 is increased exponentially with time corresponding to a difference between the voltage of the capacitor 111 at the time of beginning the mode 1 and the voltage of the unit battery 101a.

Next, in mode 2, the selecting switch 103a is turned off and the switching means 105 is turned on by control signals from the driver 107 to connect the capacitor 111 and the capacitor 104 in parallel and transfer the charge in the capacitor 111 to the capacitor 104. In this time, the voltage of the capacitor 104 is also increased exponentially with time corresponding to a difference between the voltage of the capacitor 104 at the time of beginning the mode 2 and the voltage of the capacitor 111. After that, by repeating the switching means 103a and 105 to be complementarily switched on and off, that is, by alternatively repeating the mode 1 and the mode 2, the voltage between the terminals of the capacitor 104 is approaching to the voltage of the unit battery 101a. Letting an electric potential difference of the capacitor 104 between at the time of beginning and at the time of ending a mode 2 be ΔV, the repeating operation of the mode 1 and the mode 2 is continued until the electric potential differenceΔv is converted below a reference value of several tens mV. Since the voltages of the capacitors 104, 111 and the unit battery 101a becomes almost the same at the time point of completion of the voltage detection, current hardly flows the current path from the voltage detecting circuit to the battery 101a. Therefore, the voltage detection can be performed with a high accuracy without being affected by the effect of resistance components on the current path.

When the voltage of the capacitor 104 to the unit battery 101a satisfies the above-mentioned convergence judging condition, the driver means 107 switches on the switching means 103b as the mode 1 according to the instruction of the voltage detecting means 110. That is, the unit battery to be performed with voltage detection is shifted from the unit battery 101a to the unit battery 101b. Therein, the voltage stored in the capacitor 111 is used for an initial voltage for the mode 1 and does not become a loss. Similarly, the voltage of the capacitor 104 becomes an initial voltage for the mode 2 at shifting to the voltage detection of the unit battery 101b. If the voltage of the capacitor 111 is higher than the voltage of the unit battery 101b, the capacitor 111 discharges to the unit battery 101b. Therefore, it is preferable to employ the convergence judging condition that the absolute value of the above-mentioned ΔV becomes smaller than the reference value.

The voltage detecting means 110 comprises a comparing means such as, for example, a comparator to judge whether the convergence judging condition is satisfied or not by comparing the detected value of ΔV with the reference value using the comparing means. Further, the voltage detecting means 110 output the instruction signal to the driver 107 so as to output driving signals for switching between the switches 103a and 103b and turning on and off the switches, and for performing turning on and off the switch 105. Although the voltage detecting means 110 detects the voltage change ΔV in this embodiment, the voltage detecting means 110 may detect a voltage value between the both terminals of the capacitor 104 during the switch 105 being closed and compare the value with the reference value. Transmission and consumption of energy will be described below, assuming a simplest case where the capacitance of the capacitor 104 is negligible small compared to the capacitance of the capacitor 111. It is assumed that transmission of energy does not exist in the mode 2 because the input resistance of the voltage detecting means 110 is sufficiently large and the capacitance of the capacitor is sufficiently small. Letting the voltage of the battery 101a be E, the initial voltage of the capacitor 111 be V0, the final voltage be V and the capacitance of the capacitor 111 be C, in the mode 1 an energy of 0.5C(V²-V0²) is transferred from the unit battery 101a to the capacitor 111, and a charge of C(V-V0) and an energy EC(V-V0) are supplied from the battery 101a to the zone indicated by the reference character 106 of FIG. 1. From the both relationships, an energy of 0.5C(2EV-2EV0-V²+V0²) is consumed by the ON-resistance of the switch 103 and the resistance of the wiring or the like. The consumed quantity of energy does not vary regardless of the magnitude of the resistance, but a large current may be instantaneously extracted from the battery 101a when the resistance of the wiring or the like is small. However, in an actual continuos use, the value V-V0 is very small because the capacitor 111 always holds a voltage very near to a voltage of the battery 101. Therefore, a large current may flow only when any one of the switches 103 is turned on first after all the switches 103 have been kept in OFF-state for a long period. In such a case, the current can be limited to a small value by placing a resistor in the current path between the battery 101a and the capacitor 111. Further, by placing the resistor, a filter function to be described later will be improved. If there is no possibility by the capacitance C and the characteristic and the rated current capacity of the switch 103a that the switch 103a is damaged, there is no need to place the resistor described above. In order to suppress the energy loss small without changing the voltage of the battery 101a, it is preferable that the capacitances of the capacitors 111 and 104 are set to values sufficiently small to the battery 101a. The capacitance of the protective capacitor 104 of the voltage detecting circuit is generally small enough not to accumulate and release such an amount of energy to damage the switch 105. However, if the capacitance of the capacitor 104 is increased, it is necessary to place a resistor in the current path between the capacitors 111 and 104.

FIG. 2 shows a case where a high frequency disturbance (noise) is superposed on the voltage of the unit battery 101a. In this case, in the mode 1 the voltage of the noise is divided into the resistance components of the selecting switch and so on and the capacitor 111, and consequently, the effect of the noise on the voltage between the terminals of the capacitor 111 becomes smaller as the frequency of the noise is higher. On the other hand, in the mode 2, the voltage between the terminals of the capacitor 111 is not affected by the noise because the selecting switch 103 is switched off. The noise is being damped down while the modes 1 and 2 are repeated, and the voltage detection is completed when the voltage change ΔV becomes smaller than the reference value. In a case where the voltage change ΔV fluctuates at a voltage α above the reference value, that is, becomes ± α, it is preferable that the voltage detecting means 110 detects this state and averages the voltage change ΔV. In order to do this, the voltage detecting means 110 is preferably a microprocessor having a calculation function as well as an A/D converter.

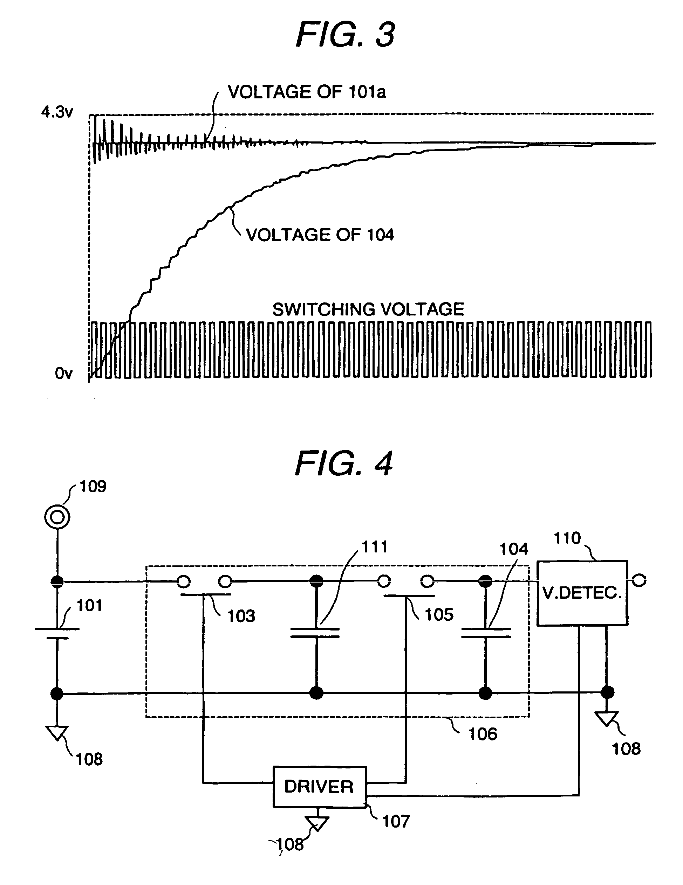

FIG. 3 shows an example of operational waveform of the embodiment of FIG. 1. The effect of the present embodiment like a low-pass filter will be described. As shown in FIG. 2, the voltage of the capacitor 104 is exponentially increased up to a voltage of a connected unit battery as the modes are repeated. The waveform of FIG. 3 is equivalent to a waveform in the case where a step response of a low-pass filter is digitally sample-held. Therefore, from the corresponding relationship between the step response and the filter effect, the present embodiment has an effect similar to the digital low-pass filter. When the filter effect is required to be reinforced, by taking any one or a plurality of the measures that ① the capacitance of the capacitor 111 is set small compared to that of the capacitor ② the resistance components is increased and ③ the switching timing is delayed, the frequency of the response can be made low, and the performance as the low-pass filter can be improved to suppress the peak voltage of the noise. On the contrary, when the noise in the input voltage is small and the demand is stronger in the response speed than the filter effect, it should be taken measures opposite to the above measures ①, ② and ③. In a case of not using the capacitor 104, the filter effect in this embodiment becomes an RC filter effect composed of the capacitor 111 and the resistance components.

In a case where the unit battery 101 is a lithium secondary battery, the average voltage is 3.6 V, and the electric potential of the E⁺ terminal 109 becomes 10.8 V on the basis of the E⁻ terminal 105. Further, in a case where the voltage detecting circuit is composed of an A/D converter of a general rated power supply voltage of 5 V and an MCU (microcomputer), the voltage of the E⁺ terminal 109 can not be directly applied to the A/D converter because of the withstanding voltage of the elements of the voltage detecting circuit. However, according to the circuit configuration of FIG. 1, the voltage of the unit battery 101a is once transferred to the capacitor 111 in the floating state, and then converted to a voltage of the capacitor 104 on the basis of the E⁻ terminal 108 as the reference electric potential using the switch 105. Therefore, the voltage applied to the A/D converter becomes lower than the withstanding voltage of the A/D converter. In other words, the battery apparatus of the present invention has a function to perform electric potential level conversion of a voltage of battery. From this viewpoint, the zone indicated by the reference character 106 of FIG. 1 is hereinafter referred to as an electric potential level converting means.

Summarizing the above, since the current flowing in the unit battery 101 and each of the switches approach to 0 (zero) by holding a nearly equal voltage in the capacitor 111 or in the capacitor 104 and the capacitor 111, the voltage between the terminals of the unit battery 101 can be transfer to the voltage detecting circuit with a high accuracy while the electric potential level is being converted without being affected by the effects of the internal inductance of the unit battery 101, the ON-resistance of each of the switches and the resistance components.

Further, since the battery apparatus of the present embodiment does not use any differential amplifier, different from that in the conventional technology, the consumed current can be reduced and at the same time the cost can be reduced.

As described above, according to the present embodiment, it is possible to obtain the electricity storing control system which is few in number of circuits, low in price, small in size, small in consumption electric power, high in detecting accuracy, high in noise resistance and high in reliability.

FIG. 4 is a circuit diagram showing a second embodiment in accordance with the present invention. When the filter effect is required at controlling a single battery, the selecting switch 103 and the switching means 105 may be used one for each, and the terminals of the capacitors 111, 104 in the side not connected the switches can be directly connected to the terminal of the battery 101. The capacitor 111 may be in the floating electric potential state, as in the previous embodiment.

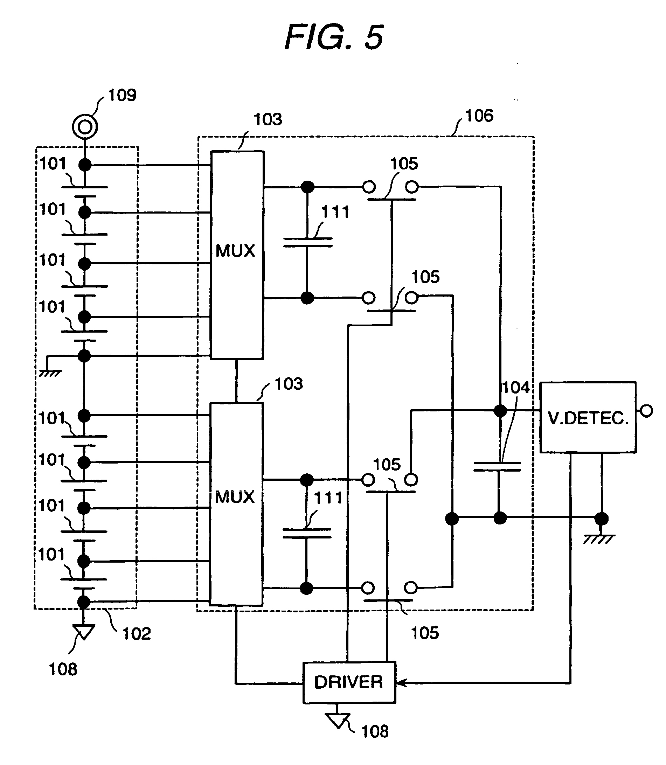

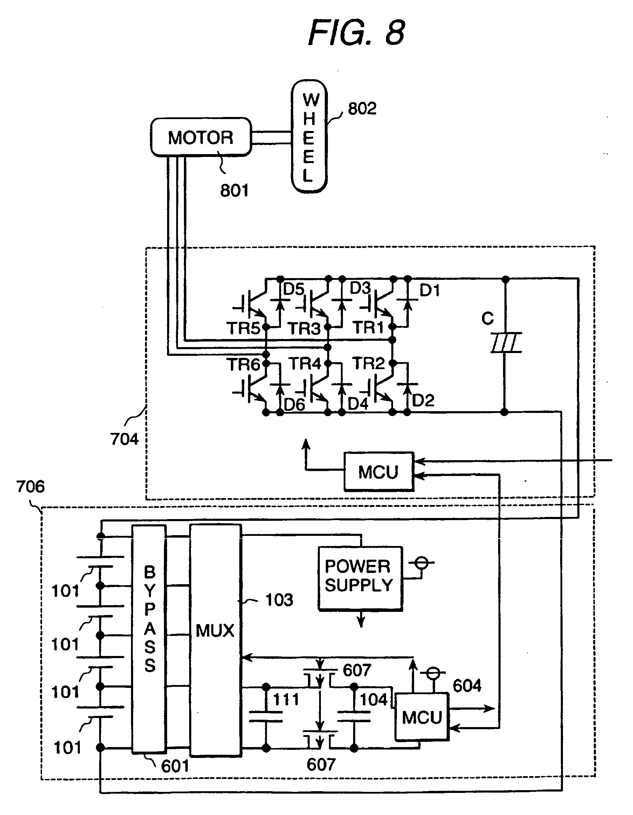

FIG. 5 is a circuit diagram showing a third embodiment in accordance with the present invention. A selecting switch 103 similar to that of FIG. 1 is disposed to four unit batteries 101. The selecting switch 101 is constructed with s multiplexer MUX which has a function to connect a positive pole and a negative pole of each of the unit batteries to a capacitor 111 as the selecting switch 103a in FIG. 1. Further, the selecting switches 103 are controlled by a driver 107, as in FIG. 1. Multiplexers of 4 or 8 channels are commercially available. In the embodiment of FIG. 8, eight unit batteries are connected in series, the capacitor 111 and the switch 105 and the multiplexer of four channels as a selecting switch 103 are connected to each of the upper four unit batteries and the lower four unit batteries.

Therein, in a case where a withstanding voltage of elements of the switching means inside the multiplexer is lower than the voltage of the eight unit batteries connected in series, as shown in FIG. 5 one capacitor 111 is used for four unit batteries so that the reference voltage of each of the multiplexers is set to the lowest voltage of the unit batteries covered by each of the multiplexers. At the same time, by setting the reference voltage of the voltage detecting circuit to a voltage of the central terminal of the battery row 102 not the E⁻ terminal, voltages of the eight unit batteries can be detected though the voltage corresponding to four unit batteries is applied to the multiplexer.

FIG. 6 is a circuit diagram showing a fourth embodiment in accordance with the present invention. Referring to FIG. 6, the reference character 101 is the same unit battery as that in the embodiment of FIG. 1, and a selecting switch 103 (multiplexer MUX) for connecting a positive pole and a negative pole of each of the unit batteries is provided, similarly to FIG. 1. A MOSFET 607 is the switching means indicated by the reference character 105 in FIG. 1 replaced by a specific semiconductor switching element, and the basic function of the MOSFET 607 is the same as that in FIG. 1. A capacitor 104 also functions similarly to the capacitor 104 in FIG. 1. In FIG. 6, a zener diode 603 connected to the capacitor 104 in parallel limits voltage so that a voltage of the capacitor 104 becomes lower than a withstanding voltage of an A/D converter 610 in the next stage. The A/D converter 601 and a microcomputer (MCU) 604 correspond to the voltage detecting means 110 in FIG. 1. In FIG. 6, the driver 107 in FIG. 1 is contained in the MCU (microcomputer) 604. Therein, the reference character 612 indicates a clock generating means, and the reference character 609 indicates a memory means. Although they are functions to be essentially incorporated in the MCU 604, they are shown outside the MCU in the embodiment of FIG. 6 in order to make it easy to understand each of the functions. The clock generating means 612 supplies the A/D converter 610, the MCU 604 and the memory means 609 with a clock signal to be a basic timing for digital processing.

Voltage of the unit battery is transmitted to the A/D converter 610 though the capacitors 111 and 104, and the analogue voltage value is converted into a digital value there. The digitized voltage value is input from the A/D converter 610 to the MCU 604 to be judged whether or not the absolute value of the voltage changing amount ΔV of the capacitor 104 in the mode 2 is converged below the reference value, as described previously. The MCU 604 also transmits a control signal to the selecting switch 103 and the MOSFET 607 to perform repetition of the above-mentioned operations of the mode 1 and the mode 2. When the voltage changing amount ΔV is converged below the reference value, the MCU 604 selects another unit battery using the selecting switch 103 and performs repetition of the operations of the mode 1 and the mode 2. The MCU 604 sequentially reads voltage of each of the batteries through the A/D converter and transmits the voltage information of each of the batteries to a higher level controller, not shown, through a communication I/F (interface).

A bypass circuit 601 having series connected circuits is connected to the unit batteries in parallel. Each of the series connected circuits is composed of a current bypass FET 608 and a resistance means 606 connected between a positive pole and a negative pole of each of the unit batteries in parallel. Each of the FETs 608 is switched on and off by a gate signal output from the MCU 604. Gate signal lines from the MCU 604 to the FETs 608 are illustrated by a single line in FIG. 6, the gate signal is independently input to each of the FETs. The MCU 604 sets an ON-OFF duty of a gate signal to the FET 608 of the bypass circuit connected to each of the unit batteries in parallel corresponding to a detected voltage of each of the unit batteries to adjust the discharge current. Instead of using the detected voltage to set the ON-OFF duty of the FET 608, a calculated value of stored electricity quantity may be used by calculating the stored electricity quantity of the unit battery from the detected voltage in the MCU. It is required to store energy in the unit battery 101 as much as possible, but there is limitation in the full-charge voltage. Therefore, it is required to charge all the unit batteries up to the full-charge voltage with a high accuracy. In order to do so, voltages of the units batteries are detected while being charged, and charging speed of the unit battery 101 having a high voltage is decreased by switching on the FET 608 of the current bypass circuit 601 connected to the unit battery 101 having a high voltage in parallel to bypass the charging current. When a voltage of the unit battery 101 having a high voltage at the initial stage becomes equal to voltages of the other unit batteries by the current bypass, the current bypass FET 608 is again switched off.

In the conventional method, all the surplus energy is thrown away by letting the current flow through a bypass resistance means. However, the circuit configuration in the present embodiment has a function to make the voltages of the unit batteries uniform. That is, when the capacitors 111 and 104 are switched from a unit battery having a higher voltage to a unit battery having a lower voltage, the capacitors hold the higher voltage of the unit battery and the charge is transferred from the capacitor 111 to the unit battery having the lower voltage. On the contrary, when the capacitors 111 and 104 are switched from a unit battery having a lower voltage to a unit battery having a higher voltage, energy is transferred from the unit battery having the higher voltage to the capacitors 111 and 104. As a result, the charge voltages of the unit batteries can be made uniform.

From the viewpoint of energy, part of energy extracted from the unit battery 101 having the higher voltage is consumed by the resistance component between the capacitor 111 and the unit battery 101 in the process of transferring the charge from the unit battery 101 to the capacitor 111 and in the process of transferring the charge from the capacitor 111 to the unit battery 101 because of voltage drop in the processes of transferring the charge. Letting the voltage of the unit battery having the higher voltage be Vh and the voltage of the unit battery having the lower voltage be Vl in a case where the capacitance of the capacitor 104 is sufficiently small compared to the capacitance of the capacitor 111, a ratio of a quantity of energy transferred between the unit batteries to a quantity of energy consumed by the resistance component becomes Vl : Vh -Vl, and the variations of voltage can be corrected with a higher efficiency as the variations of voltage between the unit batteries are small. By employing this method, the voltage of the batteries can be always made uniform with a high efficiency by correcting the variations of voltage while always monitoring the voltages of the unit batteries 101 during using the batteries 101.

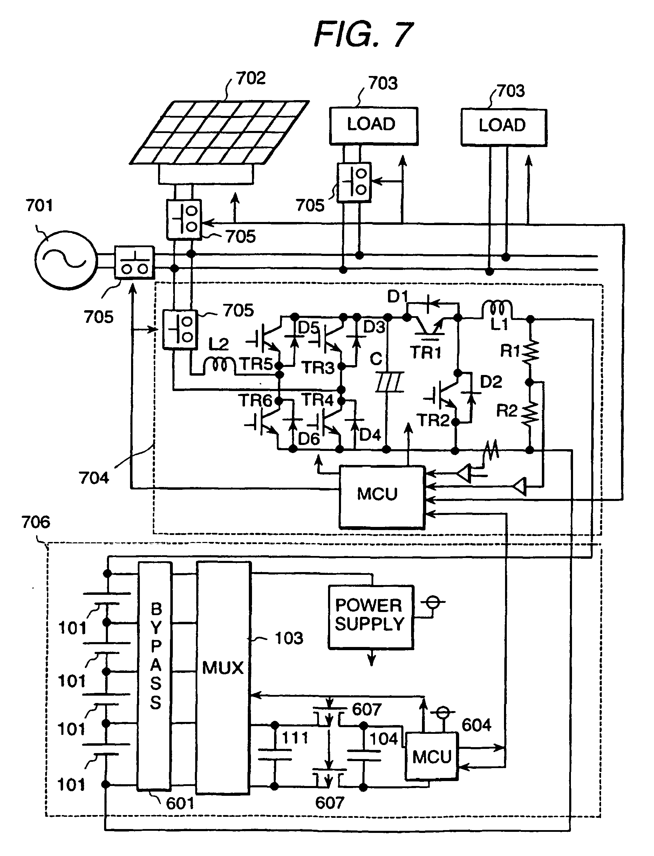

FIG. 7 is a circuit diagram showing a fifth embodiment in accordance with the present invention. In the figure, the reference character 701 is a commercial power supply, the reference character 702 is a solar-electric power generator, the reference character 703 is loads, the reference character 704 is a charging and discharging control converter and the reference character 705 is a switch.

A plurality of unit batteries 101 are connected in series, and each of the unit batteries is connected to a bypass circuit 601 and a selecting switch 103 in parallel. A capacitor 111 is connected to output terminals of the selecting switch 103. A capacitor 104 and input terminals of an A/D converter of a microcomputer 604 are connected to each other in parallel, and connections with the capacitor 111 are controlled by FETs 607. Further, a charging and discharging control converter 704 is connected between both ends of the battery row, and an MCU in a battery circuit 706 and an MCU in the charging and discharging control converter 704 are connected to each other. Furthermore, the solar-electric power generator 702, the loads 703 and the charging and discharging control converter 704 are connected to the common commercial power supply 701 through the switches 705, respectively. At the same time, the solar-electric power generator 702, the loads 703 , the charging and discharging control converter 704 and the switches 705 are connected with bidirectional signal system.

The solar-electric power generator 702 is an apparatus for converting solar light to direct current electric power using a solar battery and outputting alternating current electric power using an inverter. The loads 703 are electric appliances such as an air-conditioner, a refrigerator, a microwave oven, lighting and electric machines such as a motor, a computer, medical equipment. The charging and discharging control converter 704 is a charging and discharging unit for converting alternating current electric power to direct current electric power and for converting direct current electric power to alternating current electric power. Further, the charging and discharging control converter 704 also serves as a control unit for controlling the above-mentioned machines such as the solar-electric power generator 702, the loads 703 and so on.

In some cases, these machines have the switches 705 inside the system. Further, the battery apparatus in accordance with the present invention may be formed in a connecting configuration of the charging and discharging control converter 704 and the other machines other than the configuration shown in the figure.

According to the configuration shown in the figure, when the commercial power supply 701 and the solar-electric power generator 702 can not afford to supply electric power required by the loads 703, electric power is supplied from the batteries 101 through the charging and discharging control converter 704. On the other hand, when electric power supplied from the commercial power supply 701 and the solar-electric power generator 702 is excess, the electric power is charged in the batteries 101 through the charging and discharging control converter 704.

When the voltage between the terminals of the battery row 101 reaches a discharge stop level or a charge stop level during these operations described above, the battery circuit 706 transmits the signal to the charging and discharging control converter 704, and the charging and discharging control converter 704 stops the operation of charging or discharging. This configuration can reduce a contract electric power capacity and consumed electric power of the commercial power supply 701 and the rated electric generation of the solar-electric power generator 702, and accordingly the cost of equipment and the running costs can be reduced. Further, electric power is supplied from the batteries 101 to the commercial power supply 701 in a certain time zone when electric power is concentratively consumed, and the battery apparatus is charged up in a certain time zone when electric power is less consumed. By doing so, consumption of electric power can be flattened.

Furthermore, since the charging and discharging control converter 704 monitors electric power consumed by the loads 703 and controls the loads 703, energy saving and effective use of electric power can be performed.

FIG. 8 is a circuit diagram showing a sixth embodiment in accordance with the present invention. The embodiment is a circuit for supplying electric power to a driving system of an electric vehicle comprising a motor 801 and wheels 802 driven by the motor 801 which replace the solar-electric power generator 702 and the loads 703 in the fourth embodiment of FIG. 7.

In this feature of use, since there is no means for supplying electric power from the external to the batteries 101 during running, it is required to extract electric power from the batteries as much as possible in order to lengthen the running distance.

Discharge current flows in the batteries for several seconds while the accelerator is ON, and charge current generated by the motor flows for several seconds while the brake is ON. In addition, electric power corresponding to kinetic energy of the vehicle always flows in and out of the batteries, and noise caused by the current having a frequency equivalent to integer times of number of rotations of the motor and noise having a frequency equivalent to integer times of the clock frequency operating the inverter are superposed on the voltage of the batteries. Further, voltage of the batteries is increased when it is charged and decreased when it is discharged due to the characteristic of battery. Furthermore, the voltage contains fast-responding components and slow-responding components to the current. Therefore, a large volume of information is necessary to detect the voltage of the batteries in a state of no current flow while being charged and discharged, and accordingly it is necessary to calculate using a microcomputer.

In a case where a battery control system of a conventional type is used and lithium secondary batteries are used as the batteries, all the batteries are charged up to the full charged state without any problem. However, in regard to energy extracted from the batteries, when variations of voltages occur in the batteries and the voltage of a battery among them having the lowest voltage reaches a discharge disabled voltage, energy can not be extracted from all the batteries because of protecting the batteries.

Further, in regard to noise removing measures, in the conventional battery control system, only high frequency noises are removed using an LC filter, and values of several times to several tens times of voltage detection results are averaged using a microcomputer to remove low frequency noises, and the averaged value is employed as an actual voltage detection result.

On the other hand, in the present method, voltages of the batteries are measured while the variations in the voltages of the batteries are being sequentially corrected with a high efficiency and consequently all the batteries reach the discharge disabled voltage at a time, all the available energy stored in the batteries can be used out and accordingly the running distance can be increased longer compared to that of the conventional method.

Further, in regard to noise removing measures, since the battery apparatus of the present method has the filter effect as described above, it is possible to remove the low frequency noises which have been removed using a microcomputer in the conventional method, and accordingly it is possible to reduce the calculation load of the microcomputer.

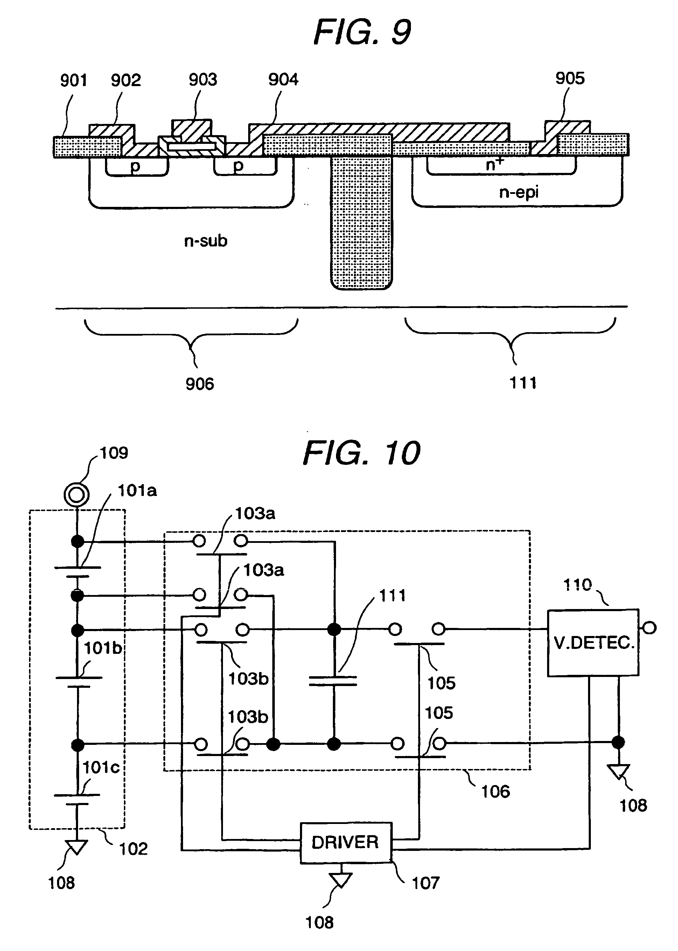

FIG. 9 is a view showing a seventh embodiment in accordance with the present invention. The figure shows a cross section of a part of the p-MOSFET 906 and the capacitor 111 when the battery control system in accordance with the present invention is formed with a semiconductor integrated circuit.

The p-MOSFET 906 and the capacitor 111 are formed on a single n-type substrate. The p-MOSFET 906 is composed of a source electrode 902 and a p-layer formed under the source electrode, a gate electrode 903 and an insulator of an oxide film (SiO₂) 901 formed under the gate electrode, a drain electrode 904 and a p-layer formed under the drain electrode, and an n-layer formed so as to float the both p-layers and the gate oxide film. The capacitor 111 is formed of an insulator using the oxide film 901 and electrodes using an aluminum wiring extending from the drain electrode 904 and an n⁺ layer connected an electrode terminal 905.

The oxide film 901 of the capacitor is laminated thinner than the gate oxide film 901 of the p-MOSFET. Letting the thickness of the oxide film be Tox, the dielectric constant be ε and the aria be S, the capacitance C of the capacitor 111 is expressed as C = εS/Tox. Therefore, the capacitance C can be made larger than the parasitic capacitance of the p-MOSFET.

As described above, according to the present embodiment, since all the parts including the microcomputer of the battery control system can be integrated in a one-chip IC, it is possible to provide a high reliable and small volume battery control system with a low price.

FIG. 10 is a circuit diagram showing an eighth embodiment in accordance with the present invention. A different point from the embodiment of FIG. 1 is that this embodiment does not include the electric energy storing means, that is, the capacitor 104 disposed between the switching means 105 and the voltage detecting circuit 110 and connected to the voltage detecting circuit. The configuration and the operation of the battery apparatus are the same as those of FIG. 1 except for the above-mentioned different point and a point that the function of removing voltage oscillation components is slightly decreased when the switching means 105 is closed and the capacitor 111 is connected to the voltage detecting circuit 110. That is, in the operation of this embodiment, when the electric potential difference ΔV of the capacitor 111 at the time of beginning and at the time of ending of the mode 2 shown in FIG. 2 is converged to a value below the preset reference value, the voltage of the capacitor 111 is detected as a voltage of the unit battery by the voltage detecting means 110. However, the present embodiment has an advantage in that the circuit configuration is simple and the size of the semiconductor chip can be decreased in a case where the battery control system is formed in a semiconductor integrated circuit as in the embodiment of FIG. 9. In a case of a single unit battery as shown in the embodiment of FIG. 4, a system not contain the capacitor 104 may be constructed similarly to this embodiment.

According to the present invention, the accuracy of voltage detection of the batteries can be improved, and the reliability of the battery apparatus and the control system therefor can be improved.

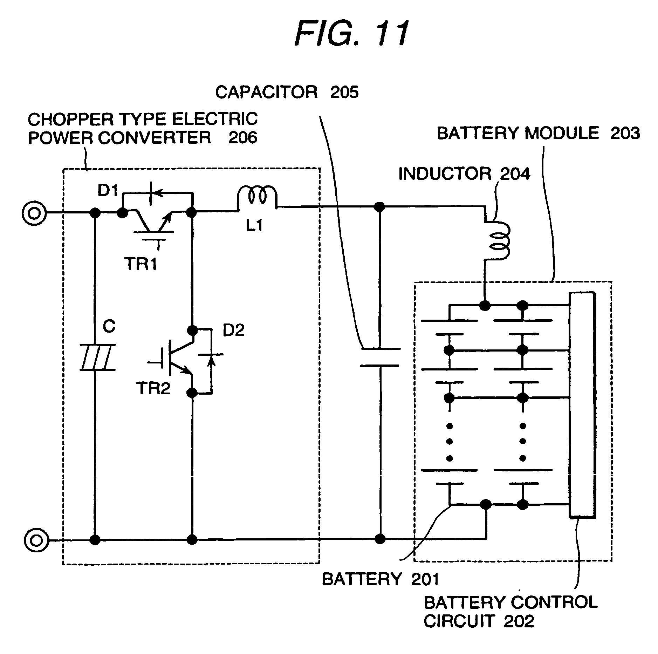

Ninth to fourteenth embodiments of the present invention will be described below in detail, referring to the accompanied figures 11 to 16. Two or more like parts existing in the figure are identified by the same reference character, and the explanation will be omitted.

FIG. 11 is a circuit diagram showing a first example. Referring to the figure, the reference character 201 is a battery, the reference character 202 is a battery control circuit, the reference character 203 is a battery module, the reference character 204 is an inductor, the reference character 205 is a capacitor, and the reference character 206 is a chopper type electric power converter.

The battery module 203 is constructed by connecting a plurality of the batteries 201 in series and connecting the batteries 201 and the battery control circuit 202 in parallel,

The battery control circuit 202 is composed of a voltage detecting circuit for detecting voltage of each of the batteries 201, a comparing circuit for comparing these voltages and a by-pass circuit connecting the batteries in parallel and by-passing current flowing the batteries. The battery control circuit 202 performs voltage detection to judge whether or not voltage of each of the batteries 201 is within a range of use voltage, and adjusts voltage unbalance between the batteries 201.

The inductor 204 is inserted in series with the battery module 203, and the capacitor 205 is connected to both ends of the series connection portion of the battery module 203 and the inductor 204 in parallel, and at the same time the chopper type electric power converter 206 is connected in parallel to these units.

The chopper type electric power converter 206 in this case is a bidirectional step-up and step-down chopper circuit. Therefore, charging and discharging voltage and current of the battery module 203 is controlled by performing step-down chopper operation when the battery module 203 is charged, and by performing step-up chopper operation when the battery module 203 is discharged.

The chopper type electric power converter 206 may be constructed such that the paths are separately constructed for charging and for discharging by using a unidirectional step-up chopper circuit and a unidirectional step-down chopper circuit.

To the high frequency electric power (the ripple components) produced in charging and discharging operations of the chopper type electric power converter 206, the inductor 204 inserted in series to the battery module 203 becomes a high impedance and the capacitor 205 connected to the battery module 203 in parallel becomes a low impedance. Therefore, the high frequency electric power, that is, the ripple components does not pass through the inductance 204 becoming a high impedance but passes through the low impedance capacitor 205 side.

Assuming that a frequency of the ripple component is 16 kHz, an inductance of the inductor 204 is 10 µH and a capacity of the capacitor 205 is 100 µF, the impedance of the inductor 204 becomes 1 Ω and the impedance of the capacitor 205 becomes 0.1 Ω. It is clear from this result that the impedance ratio of the inductor 204 to the capacitor 205 is 201 and accordingly most of the current of the ripple component flows through the capacitor 205.

Further, both of the values of the inductor 204 and the capacitor 205 are very small. Particularly, in order to obtain the above value of the inductor 204 using a coil, the value can be obtained by winding a lead wire around a magnetic core only one turn. In addition, the value may be realized by using a part easy in assembling and working such as a cut-core.

The values of the inductor 204 and the capacitor 205 are very small, as described above, and accordingly, the battery apparatus can be made small in size, light in weigh and low in cost.

On the other hand, to direct current power, the inductor 204 inserted in series to the battery module 203 becomes a low impedance, and the capacitor 205 connected in parallel to the battery module 203 becomes a high impedance. Therefore, the direct current power does not pass through the high impedance capacitor 205, but passes through the low impedance inductor 204.

Thereby, the high frequency electric power affecting bad effects to the battery 201 and the battery control circuit 202 does not pass through the battery 201 and the battery control circuit 202, and on the other hand, direct current power necessary for the battery 201 and the battery control circuit 202 can pass through the battery 201 and the battery control circuit 202.

Accordingly, it is possible to prevent increase in the self-temperature rise of the batteries 201 caused by the high frequency electric power (ripple components) generated in charging and discharging operations of the chopper type electric power converter 206. Further, it is possible to avoid reducing the life-time of the battery 201 due to increase in self-temperature rise and danger such as explosion, burst or ignition, which improves the life-time, the performance and the safety. Furthermore, the efficiency can be increased by reducing the thermal loss of the battery 201.

Since the ripple components in the voltage and the current are by-passed, the values of the voltage and the current of the batteries 201 can be correctly detected, and accordingly the reliability of the batteries 201 can be improved.

Since the high frequency electric power passing through the battery module 203 is reduced, the chopper type electric power converter 206 may be designed so as to allow to generate more high frequency electric power. In other words, it is possible to use a low frequency semiconductor switch and an inductor having a low inductance, and accordingly the battery apparatus can be made small in size, light in weight and low in cost.

Furthermore, a large current and high voltage battery apparatus can be made, which has been difficult in the past.

As described above, according to the present embodiment, the ripple in voltage and current can be reduced to improve the detecting accuracy and the reliability of the voltage and the current, and temperature rise of the batteries can be reduced to improve the safety, the life-time and the performance of the batteries, and the battery apparatus can be made light in weight, small in size, low in cost and high in safety. Further, a large current and high voltage battery apparatus can be made.

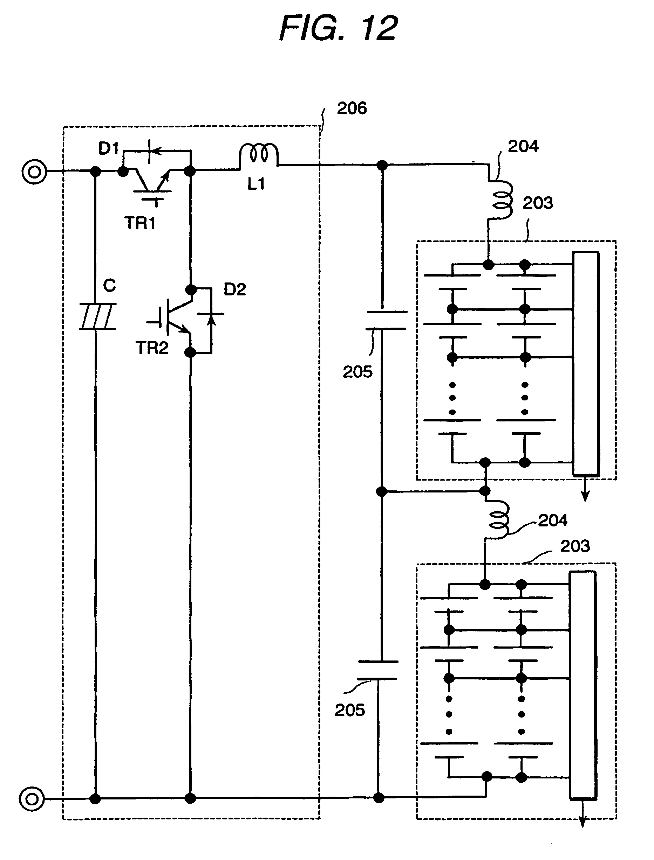

FIG. 12 is a circuit diagram showing a second example. An inductor 204 is inserted in series a battery module 203, and a capacitor 205 is connected between both ends of the series connection portions of the battery module 203 and the inductor 204 in parallel. A unit is formed of the series connection of the battery module 203 and the inductor 204 and the capacitor 205 connected to them in parallel. The units are further connected in series to form a battery modules group. At the same time, a chopper type electric power converter 206 is connected to both ends of the battery module group.

Therefore, similar to the first example, to the high frequency electric power (the ripple components) produced in charging and discharging operations of the chopper type electric power converter 206, the inductor 204 inserted in series to the battery module 203 becomes a high impedance and the capacitor 205 connected to the battery module 203 in parallel becomes a low impedance. Therefore, the high frequency electric power, that is, the ripple components does not pass through the inductance 204 becoming a high impedance but passes through the low impedance capacitor 205 side.

On the other hand, to direct current power, the inductor 204 inserted in series to the battery module 203 becomes a low impedance, and the capacitor 205 connected in parallel to the battery module 203 becomes a high impedance. Therefore, the direct current power does not pass through the high impedance capacitor 205, but passes through the low impedance inductor 204.

Thereby, the high frequency electric power affecting bad effects to the battery 201 and the battery control circuit 202 does not pass through the battery 201 and the battery control circuit 202, and on the other hand, direct current power necessary for the battery 201 and the battery control circuit 202 can pass through the battery 201 and the battery control circuit 202.

Particularly, when many batteries 201 are connected in series, the capacitor 205 connected to the both ends of the batteries connected in series needs to be set to a high withstanding voltage, and therefore, the capacitor 205 becomes large in size and high in cost. However, since each of the capacitors 205 is connected to each of the battery modules 203, the withstanding voltage of the capacitor 205 can be suppressed to as low as the voltage of the battery module 203.

Therefore, the ripple in voltage and current can be reduced to improve the detecting accuracy and the reliability of the voltage and the current, and temperature rise of the batteries can be reduced to improve the safety, the life-time and the performance of the batteries, and the battery apparatus can be made light in weight, small in size, low in cost and high in safety. Further, a large current and high voltage battery apparatus can be made.

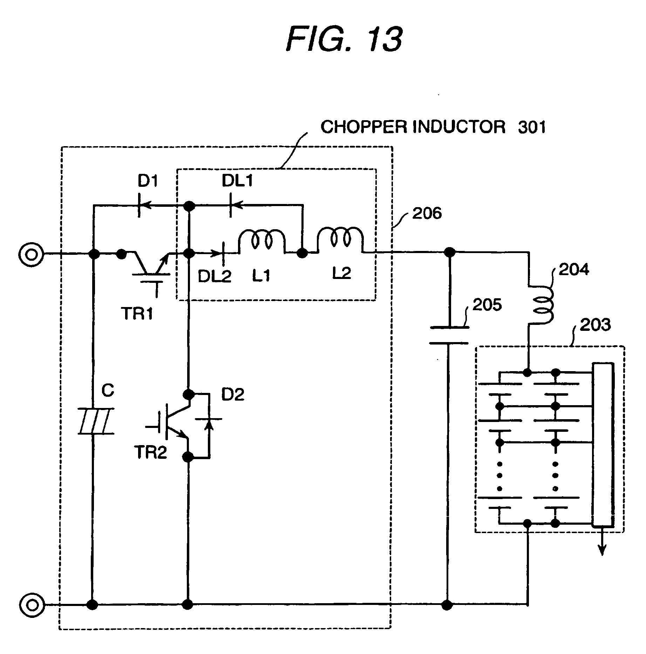

FIG. 13 is a circuit diagram showing a third example. In the figure, the reference character 301 is a chopper inductor. The chopper inductor 301 is constructed in such that two inductors L1, L2 are connected in series, and a rectifier DL2 is connected to one of them L1 in series, and a rectifier DL1 is connected between both ends of the series connection portion of the inductor L1 and the rectifier DL2 in parallel so as to have an inverse polarity to the rectifier DL2.

The battery apparatus is constructed with the battery module 203 composed of a plurality of the batteries 201 and the chopper type electric power converter 206 including the chopper inductor 301.

In the present example, each of the inductors L1, L2 is constructed with one inductor, but may be constructed with a plurality of inductors. Further, in the present example, diodes are used for the rectifiers, but thyristors or diodes may be used.

According to such an example, during discharging period, current does not flow through the inductor L1 by being blocked by the rectifier DL2, but flows through the rectifier DL1. Therefore, the inductance of the chopper inductor 301 at discharging period becomes a value of L2. On the other hand, during charging period, current flows through the inductor L1, the rectifier DL2 and the inductor L2 by being blocked by the rectifier DL1. Therefore, the inductance of the chopper inductor 301 at charging period becomes the sum of the values of L1 and L2. That is, the inductance of the chopper inductor 301 is larger at charging period than at discharging period.

Comparing values of current at charging period and at discharging period, the value of current at charging period is generally set to a value smaller than the value of current at discharging period. The reason is that there is sufficient recharging time due to small frequency of occurrence of power failures and short time of power failure as in the untinterruptible power supply system, and that the efficiency of charging is improved.

Comparing accuracies of detecting and controlling current at charging period and at discharging period, the accuracy at charging period is generally required higher than the accuracy at discharging period. The reason is that it is necessary to perform detection and control of very small current when recharging termination is detected by a current value, when a charged amount is calculated by accumulation of current values, or when the batteries 201 are charged to be rescued from an over-discharging state.

Therefore, by setting the inductance of the chopper inductor 301 at charging period to a large value as described above, the accuracies of current detection and current control at charging period can be improved by decreasing the ripples. Further, since the current value during charging is small, the battery apparatus can be made light in weight, small in size and low in cost though the inductor L1 has a large value of inductance.

Since the values of the inductance and the rated current of the chopper inductor 301 can be optimized both at charging and discharging periods, the chopper inductor 301 can be made light in weight, small in size and low in cost.

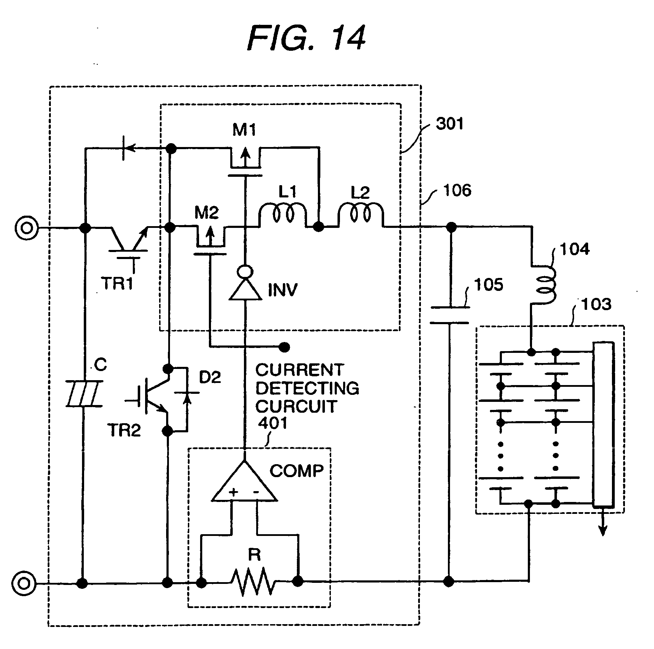

FIG. 14 is a circuit diagram showing a fourth example. The reference character 401 is a current detecting circuit. Although the current detecting circuit 401 in this embodiment is constructed with a shunt resistor R and a comparator COMP, another configuration is acceptable.

In the chopper inductor 301, two conductors L1, L2 are connected in series, a p-type MOS transistor M2 is connected to one of the inductors L1 in series as a switch, another p-type MOS transistor M1 is connected between both ends of the series connection portion of the inductor L1 and the p-type MOS transistor M2 in parallel. A gate of the p-type MOS transistor M2 and a gate of the p-type MOS transistor M1 are connected to outputs of the comparator COMP.

The battery apparatus is constructed with the battery module 203 composed of a plurality of the batteries 201 and the chopper type electric power converter 206 including the chopper inductor 301 and the current detecting circuit 401.

In the present example, each of the inductors L1, L2 is constructed with one inductor, but may be constructed with a plurality of inductors. Further, in the present example, p-type MOS transistors are used, but elements of another type such as thyristors or relays may be used.

According to such an example, current during discharging period does not flow through the inductor L1 by opening the p-type MOS transistor M2, but flows through the p-type MOS transistor M1. Therefore, the inductance of the chopper inductor 301 at discharging period becomes a value of L2. On the other hand, during charging period, current flows through the inductor L1, the p-type MOS transistor M2 and the inductor L2 by opening the p-type MOS transistor M1. Therefore, the inductance of the chopper inductor 301 at charging period becomes the sum of the values of L1 and L2. That is, the inductance of the chopper inductor 301 is larger at charging period than at discharging period.

Therefore, similarly to the third example by setting the inductance of the chopper inductor 301 at charging period to a large value as described above, the accuracies of current detection and current control at charging period can be improved by decreasing the ripples. Further, since the current value during charging is small, the battery apparatus can be made light in weight, small in size and low in cost though the inductor L1 has a large value of inductance.

Since the values of the inductance and the rated current of the chopper inductor 301 can be optimized both at charging and discharging periods, the chopper inductor 301 can be made light in weight, small in size and low in cost.

Further, the current detecting circuit 401 in this example is constructed so as to bidirectionally detect the current, the value of inductance of the chopper inductor 301 is changed at charging period and at discharging period depending on the detected value. However, the switches can be arbitrarily operated by constructing the current detecting circuit so that the current value can be also identified using an operation amplifier or a micro-computer.

Particularly, in the above-described configuration, when recharging termination is detected by a current value, when a charged amount is calculated by accumulation of current values, or when the batteries 201 are charged to be rescued from an over-discharging state, the value of the inductance of the chopper inductor 301 can be increased and accordingly detection and control of very small current can be performed.

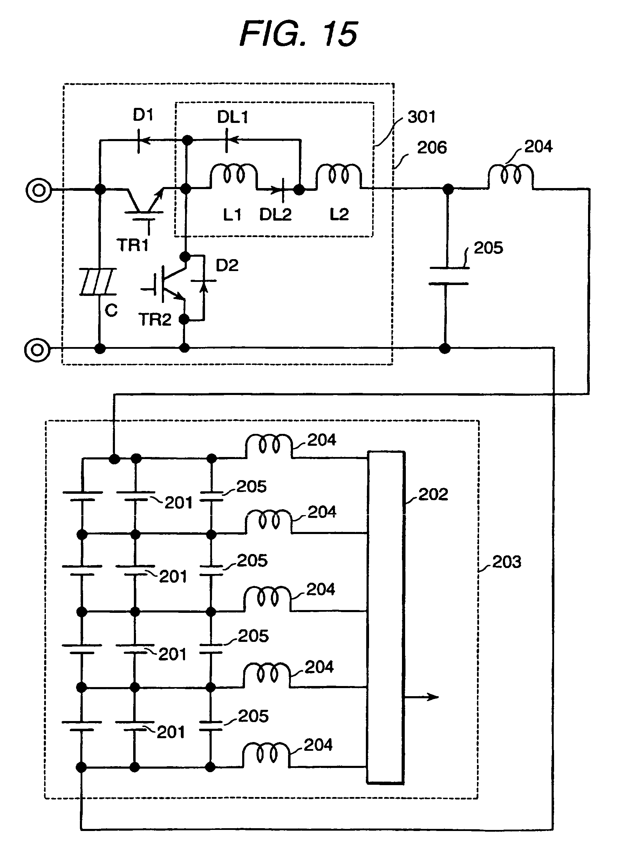

FIG. 15 is a circuit diagram showing a fifth example. In the battery module 203, a plurality of batteries 201 are connected in series, a capacitor 204 is connected to each of the batteries 201 in parallel, and each ends of the capacitor are connected to a battery control circuit 202 through an inductor 204.

The battery apparatus is constructed with the battery module 203 composed of a plurality of the batteries 201 and the chopper type electric power converter 206. The chopper type electric power converter 206 in this example is a bidirectional step-up and step-down chopper circuit. The chopper type electric power converter 206 may be constructed using a unidirectional step-up chopper circuit and a unidirectional step-down chopper circuit.

According to the present example, the inductor 204 becomes a high impedance and the capacitor 205 connected to the battery 201 in parallel becomes a low impedance to the high frequency electric power (the ripple components). Therefore, the high frequency electric power, that is, the ripple components does not pass through the inductor 204 becoming a high impedance but passes through the low impedance capacitor 205 side.

On the other hand, the inductor 204 becomes a low impedance and the capacitor 205 becomes a high impedance to the direct current power. Therefore, the direct current power does not pass through the capacitor 205 becoming a high impedance but passes through the low impedance inductor 204.

Thereby, the high frequency electric power affecting bad effects to the battery 201 and the battery control circuit 202 does not pass through the battery 201 and the battery control 202 circuit, and on the other hand, direct current power necessary for the battery 201 and the battery control circuit 202 can pass through the battery 201 and the battery control circuit 202.

Therefore, the ripple in voltage and current can be reduced to improve the detecting accuracy and the reliability of the voltage and the current. Temperature rise of the batteries can be reduced to improve the safety, the life-time and the performance of the batteries. The battery apparatus can be made light in weight, small in size, low in cost and high in safety.

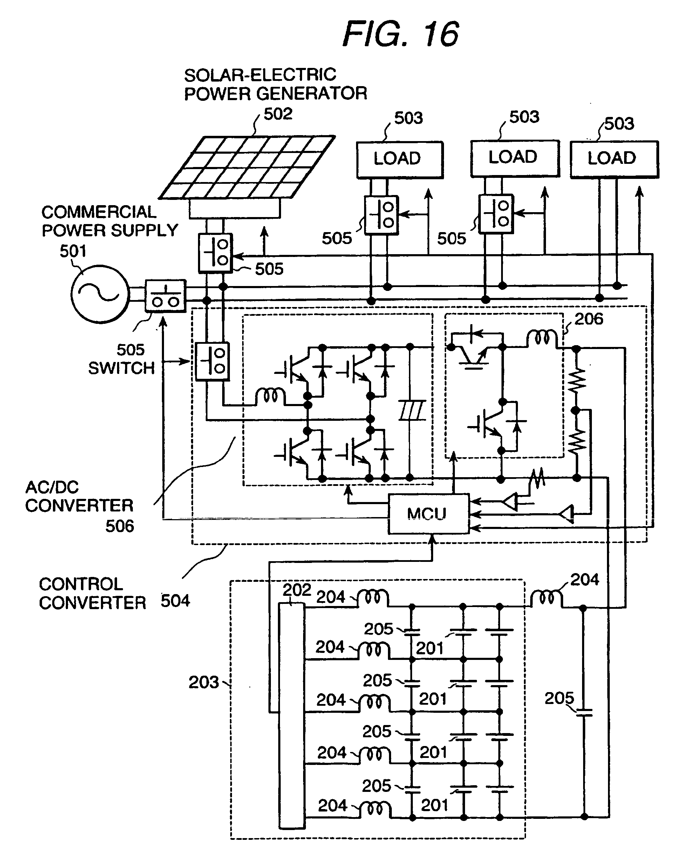

FIG. 16 is a circuit diagram showing a sixth example. In the figure, the reference character 501 is a commercial power supply, the reference character 502 is a solar-electric power generator, the reference character 503 is loads, the reference character 504 is a control converter, the reference character 505 is a switch and the reference character 506 is an AC/DC converter.

The control converter 504 comprises the chopper type electric power converter 206 composed of the AC/DC converter 506 and a step-up and step-down chopper circuit. The battery module 203 connected to the chopper type electric power converter 206 through an inductor 204. A capacitor 205 is connected to both ends of the series connecting portion of the battery module 203 and the inductor 204.

On the other hand, the solar-electric power generator 502, the loads 503 and the control converter 504 are connected to the common commercial power supply 501 through the switches 505, respectively. At the same time, the solar-electric power generator 502, the loads 503 , the control converter 504, the switches 505 and the battery control circuit 202 are connected to an MCU in the control converter 504 with bidirectional signal system.

The solar-electric power generator 502 is an apparatus for converting solar light to direct current electric power using a solar battery and outputting alternating current electric power using an inverter.

The loads 503 are electric appliances such as an air-conditioner, a refrigerator, a microwave oven, lighting and electric machines such as a motor, a computer, medical equipment.

The control converter 504 is composed of an electric power converter for converting alternating current electric power to direct current electric power and converting direct current electric power to alternating current electric power using the AC/DC converter 506 and a charging and discharging unit using the chopper type electric power converter 206. Further, the control converter 504 is composed of control unit for controlling the charging and discharging and also for controlling the above-mentioned machines such as the solar-electric power generator 502, the loads 503 and so on.

In some cases, these machines have the switches 505 inside the system. Further, the battery apparatus in accordance with the present invention may be formed in a connecting configuration of the control converter 504 and the other machines other than the configuration shown in the figure.

According to the configuration shown in the figure, when the commercial power supply 501 and the solar-electric power generator 502 can not afford to supply electric power required by the loads 503, electric power is supplied from the batteries 201 through the control converter 504. On the other hand, when electric power supplied from the commercial power supply 501 and the solar-electric power generator 502 is excess, the electric power is charged in the batteries 201 through the control converter 504.

This configuration can reduce a contract electric power capacity and consumed electric power of the commercial power supply 501 and the rated electric generation of the solar-electric power generator, and accordingly the cost of equipment and the running costs can be reduced.

Electric power is supplied from the batteries 201 to the commercial power supply 501 in a certain time zone when electric power is concentratively consumed, and the battery apparatus is charged up in a certain time zone when electric power is less consumed. By doing so, consumption of electric power can be flattened.

Further, since the control converter 504 monitors electric power consumed by the loads 503 and controls the loads 503, energy saving and effective use of electric power can be performed.

Of course, high frequency electric power (ripple) is generated in these operation, but as described above, the ripple in voltage and current can be reduced to improve the detecting accuracy and the reliability of the voltage and the current, and temperature rise of the batteries can be reduced to improve the safety, the life-time and the performance of the batteries, and the battery apparatus can be made light in weight, small in size, low in cost and high in safety. Further, a large current and high voltage battery apparatus can be made.

As having been described above, according to the present invention, it is possible to provide a battery apparatus in which the ripples in voltage and current are reduced.

Therefore, the present invention is useful for a battery such as a lithium secondary battery or an electric double layer capacitor and a battery apparatus comprising many batteries connected in series, an evaluating apparatus for evaluating the battery or the like, an equipment for manufacturing the battery or the like, and an electric equipment such as an uninterruptible electric power supply system using the battery or the like, or a battery apparatus of a motor for an electric bicycle or an electric vehicle.

## Claims

1. A battery apparatus comprising:
an electricity storing means (102) having batteries (101a-c);
a first switching means (103) connected to said batteries (101a-c);
a first electric energy storing means (111) connected to said battery through said first switching means (103);
a second switching means (105) connected to said first electric energy storing means (111); and
a voltage detecting means (110), an input terminal of said voltage detecting means (110) being connected to said first electric energy storing means (111) through said second switching means (105),
**characterized in that**
said first electric energy storing means (111) is connected between an input terminal of said voltage detecting means (110) and a reference voltage of said voltage detecting means (110) in parallel through said second switching means (105).

2. A battery apparatus according to claim 1, which further comprises a second first electric energy storing means (104) connected to said voltage detecting means (110) in parallel between said second switching means (103b) and said voltage detecting means (110).

3. A battery apparatus according to any one of claim 1 and claim 2, wherein said first switching means (103) and said second switching means (105) are complementarily switched on and off.

4. A battery apparatus according to claim 3, wherein said voltage detecting means (110) detects a voltage input to said input terminal when said first switching means (103) is switched off and said second switching means (105) is switched on.

5. A battery apparatus according to any one of claim 1 and claim 2,
wherein
said first switching means (103) and said second switching means (105) are complementally switched on and off, and a voltage inputted to said input terminal is detected after plural switching complementally.

6. A battery apparatus according to claim 4, wherein said first electric energy storing means (111) is connected to one battery which is selected from said batteries (101a-c) connected in series by said first switching means (103)

7. A battery apparatus according to claim 5, wherein said first electric energy storing means (111) is selectively connected to one battery which is selected from said batteries (101a-c) connected in series by said first switching means (103), said plurality of batteries (101a-c) being provided in said electricity storing means (102).

8. A battery apparatus according to claim 6 or 7, wherein each of said plurality of batteries (101a-c) is connected in parallel to a bypass circuit having switching elements,
said voltage detecting means (110) detects a voltage input to said input terminal when said first switching means (103) is switched off and said second switching means (105) is switched on, and
said voltage detecting means (110) controls switching-on-and-off of said switching elements according to said detected voltage.

9. A battery apparatus according to claims 1-8,
wherein the first switching means (103) is connected to the batteries (101a-c) in a floating state and the battery apparatus further comprises a control circuit comprising:
a second electric energy storing means (104) connected to said voltage detecting means (110) in parallel between said second switching means (105) and said voltage detecting means (110); wherein
said first switching means (103) and said second switching means (105) are complementally switched on and off, and
a voltage inputted to said input terminal is detected after plural switching complementally.

## Patentansprüche

1. Batterievorrichtung mit:
einer Elektrizitätsspeichereinrichtung (102), die Batterien (101a-c) aufweist;
einer ersten Schalteinrichtung (103), die mit den Batterien (101a-c) verbunden ist;
einer ersten Elektroenergie-Speichereinrichtung (111), die mit der Batterie durch die erste Schalteinrichtung (103) verbunden ist;
einer zweiten Schalteinrichtung (105), die mit der ersten Elektroenergie-Speichereinrichtung (111) verbunden ist; und
einer Spannungserfassungseinrichtung (110), wobei ein Eingangsanschluss der Spannungserfassungseinrichtung (110) mit der ersten Elektroenergie-Speichereinrichtung (111) durch die zweite Schalteinrichtung (105) verbunden ist,
**dadurch gekennzeichnet, dass**
die erste Elektroenergie-Speichereinrichtung (111) zwischen einem Eingangsanschluss der Spannungserfassungseinrichtung (110) und einer Bezugsspannung der Spannungserfassungseinrichtung (110) durch die zweite Schalteinrichtung (105) parallel geschaltet ist.

2. Batterievorrichtung nach Anspruch 1, die weiterhin eine zweite erste Elektroenergie-Speichereinrichtung (104) umfasst, die mit der Spannungserfassungseinrichtung (110) zwischen der zweiten Schalteinrichtung (103b) und der Spannungserfassungseinrichtung (110) parallel geschaltet ist.

3. Batterievorrichtung nach irgendeinem von Anspruch 1 und Anspruch 2, wobei die erste Schalteinrichtung (103) und die zweite Schalteinrichtung (105) komplementär ein- und ausgeschaltet werden.

4. Batterievorrichtung nach Anspruch 3, wobei die Spannungserfassungseinrichtung (110) eine Spannungseingabe in den Eingangsanschluss erfasst, wenn die erste Schalteinrichtung (103) ausgeschaltet und die zweite Schalteinrichtung (105) eingeschaltet wird.

5. Batterievorrichtung nach irgendeinem von Anspruch 1 und Anspruch 2, wobei die erste Schalteinrichtung (103) und die zweite Schalteinrichtung (105) komplementär ein- und ausgeschaltet werden und eine in den Eingangsanschluss eingegebene Spannung nach mehrmaligem komplementärem Schalten erfasst wird.

6. Batterievorrichtung nach Anspruch 4, wobei die erste Elektroenergie-Speichereinrichtung (111) mit einer Batterie verbunden ist, die aus den Batterien (101a-c) ausgewählt ist, die durch die erste Schalteinrichtung (103) in Reihe geschaltet sind.

7. Batterievorrichtung nach Anspruch 5, wobei die erste Elektroenergie-Speichereinrichtung (111) selektiv mit einer Batterie verbunden ist, die aus den Batterien (101a-c) ausgewählt ist, die durch die erste Schalteinrichtung (103) in Reihe geschaltet sind, wobei die mehreren Batterien (101a-c) in der Elektrospeichereinrichtung (102) vorgesehen sind.

8. Batterievorrichtung nach Anspruch 6 oder 7, wobei jede der mehreren Batterien (101a-c) parallel mit einer Umgehungsschaltung geschaltet ist, die Schaltelemente aufweist,
die Spannungserfassungseinrichtung (110) eine Spannungseingabe in den Eingangsanschluss erfasst, wenn die erste Schalteinrichtung (103) ausgeschaltet und die zweite Schalteinrichtung (105) eingeschaltet wird, und
die Spannungserfassungseinrichtung (110) das Ein- und Ausschalten der Schaltelemente nach Maßgabe der erfassten Spannung steuert.

9. Batterievorrichtung nach den Ansprächen 1-8,
wobei die erste Schalteinrichtung (103) mit den Batterien (101a-c) in einem Schwebezustand verbunden ist und die Batterievorrichtung weiterhin eine Steuerschaltung umfasst, die:
eine zweite Elektroenergie-Speichereinrichtung (104) umfasst, die mit der Spannungserfassungseinrichtung (110) zwischen der zweiten Schalteinrichtung (105) und der Spannungserfassungseinrichtung (110) parallel geschaltet ist; wobei die erste Schalteinrichtung (103) und die zweite Schalteinrichtung (105) komplementär ein- und ausgeschaltet werden, und
eine in den Eingangsanschluss eingegebene Spannung nach mehrmaligem komplementärem Schalten erfasst wird.

## Revendications

1. Dispositif de batterie comportant :
des moyens de stockage d'électricité (102) ayant des batteries (101a-c),
des premiers moyens de commutation (103) connectés auxdites batteries (101a-c),
des premiers moyens de stockage d'énergie électrique (111) connectés à ladite batterie via lesdits premiers moyens de commutation (103),
des seconds moyens de commutation (105) connectés auxdits premiers moyens de stockage d'énergie électrique (111), et
des moyens de détection de tension (110), une borne d'entrée desdits moyens de détection de tension (110) étant connectée auxdits premiers moyens de stockage d'énergie électrique (111) via lesdits seconds moyens de commutation (105),
**caractérisé en ce que**
lesdits premiers moyens de stockage d'énergie électrique (111) sont connectés entre une borne d'entrée desdits moyens de détection de tension (110) et une tension de référence desdits moyens de détection de tension ((110) en parallèle via lesdits seconds moyens de commutation (105).

2. Dispositif de batterie selon la revendication 1, lequel comporte en outre des seconds moyens de stockage d'énergie électrique (104) connectés auxdits moyens de détection de tension (110) en parallèle entre lesdits seconds moyens de commutation (103b) et lesdits moyens de détection de tension (110).

3. Dispositif de batterie selon l'une quelconque de la revendication 1 et de la revendication 2, dans lequel lesdits premiers moyens de commutation (103) et lesdits seconds moyens de commutation (105) sont à l'état passant et bloqué de manière complémentaire.

4. Dispositif de batterie selon la revendication 3, dans lequel lesdits moyens de détection de tensions (110) détectent une entrée de tension dans ladite borne d'entrée lorsque lesdits premiers moyens de commutation (103) sont à l'état bloqué et lesdits seconds moyens de commutation (105) sont à l'état passant.

5. Dispositif de batterie selon l'une quelconque de la revendication 1 et de la revendication 2, dans lequel
lesdits premiers moyens de commutation (103) et lesdits seconds moyens de commutation (105) sont à l'état passant et bloqué de manière complémentaire, et une tension entrée dans ladite borne d'entrée est détectée après plusieurs commutations de manière complémentaire.

6. Dispositif de batterie selon la revendication 4, dans lequel lesdits premiers moyens de stockage d'énergie électrique (111) sont connectés à une batterie laquelle est sélectionnée à partir desdites batteries (101a-c) montées en série par l'intermédiaire desdits premiers moyens de commutation (103).

7. Dispositif de batterie selon la revendication 5, dans lequel lesdits premiers moyens de stockage d'énergie électrique (111) sont connectés de manière sélective à une batterie laquelle est sélectionnée à partir desdites batteries (101a-c) montées en série par l'intermédiaire desdits premiers moyens de commutation (103), ladite pluralité de batteries (101a-c) étant agencées dans lesdits moyens de stockage d'électricité (102).

8. Dispositif de batterie selon la revendication 6 ou 7, dans lequel chaque batterie parmi ladite pluralité de batteries (101a-c) est montée en parallèle avec un circuit de dérivation ayant des éléments de commutation,
lesdits moyens de détection de tension (110) détectent une tension entrée dans ladite borne d'entrée lorsque lesdits premiers moyens de commutation (103) sont à l'état bloqué et lesdits seconds moyens de commutation (105) sont à l'état passant, et
lesdits moyens de détection de tension (110) commandent les états passant et bloqué desdits éléments de commutation conformément à ladite tension détectée.

9. Dispositif de batterie selon la revendication 1 à 8,
dans lequel les premiers moyens de commutation (103) sont connectés aux batteries (101a-c) dans un état flottant et le dispositif de batterie comporte en outre un circuit de commande comportant :
des seconds moyens de stockage d'énergie électrique (104) connectés auxdits moyens de détection de tensions (110) en parallèle entre lesdits seconds moyens de commutation (105) et lesdits moyens de détection de tension (110), dans lequel
lesdits premiers moyens de commutation (103) et lesdits seconds moyens de commutation (105) sont à l'état passant et bloqué de manière complémentaire, et
une tension entrée dans ladite borne d'entrée est détectée après plusieurs commutations de manière complémentaire.
